# EUROPEAN PATENT SPECIFICATION

(11) **EP 2 082 004 B1**
(45) Date of publication and mention of the grant of the patent: **18.01.2017**
(21) Application number: 07861698.4
(22) Date of filing: 05.11.2007
(51) Int. Cl.: C09J 133/00

(54) **ANTISTATIC PROTECTIVE HOT MELT ADHESIVES**
ANTISTATISCHE SCHMELZKLEBER
ADHÉSIFS THERMOFUSIBLES DE PROTECTION ANTISTATIQUES

(30) Priority: 07.11.2006 US 857377 P
(43) Date of publication of application: 29.07.2009
(73) Proprietor: Henkel AG & Co. KGaA, 40589 Düsseldorf (DE)
(72) Inventor: LU, Ming Chang, Taoyuan Hsien, 324 (TW); PALASZ, Peter D., Taplow, Maidenhead SL6 0LG (GB)
(86) International application number: PCT/US2007/023270
(87) International publication number: WO 2008/057485

(56) References cited:
- EP-A- 1 178 095
- EP-A- 1 894 982
- US-A1- 2004 169 290

## Description

### FIELD OF THE INVENTION

The invention relates to radiation curable pressure sensitive hot melt compositions and to the use of such adhesives, including use in the manufacture of protective films and other articles.

### BACKGROUND OF THE INVENTION

A single scratch or blemish will typically transform a brand new product to one that will be rejected by the consumer. Protective films are used in a number of industrial applications such as for furniture and automotive scratch protection, to protect touch screen panels used at ATMs and airline check-in kiosks, to protect components through protection and transportation to the next stage of product assembly, and also to protect fully finished products until it reaches the end user. Such products include watches, mobile phone screens, televisions, digital cameras, PDAs, TFT/LCD and LED screens, backlight units, optical films, and the like. Such films typically comprise a polypropylene or polyethylene film coated with water based adhesive film or silicone rubber.

Protective films used to protect electronic components and consumer electronics shield surfaces from scratches and/or from dust and moisture and are used extensively. Such films do not, however, protect components from damage that may occur from static electricity that may be present or form when the film is removed. There is thus a need in the art for protective films having antistatic properties. The current invention addresses this need.

### SUMMARY OF THE INVENTION

The invention provides radiation curable hot melt adhesive compositions comprising an acrylic polymer, 0.1 to 15 wt% of an antistatic agent and a photoinitiator, wherein the photoinitiator is bound to said acrylic polymer. The invention also relates to articles comprising an antistatic radiation cured adhesive.

In one embodiment the adhesive is a radiation curable hot melt pressure sensitive adhesive comprising an acrylic polymer and an antistatic agent and, if desired or required, a compatible tackifying resin and/or a multifunctional unsaturated oligomer. A preferred acrylic polymer is a UV curable acrylic polymer that comprises an acrylic copolymer covalently bound to a photoreactive group. Particularly preferred UV acrylic copolymers comprise a C4 to C8 alkyl acrylate and has bonded to it a pendant benzophenone group.

Another embodiment of the invention is directed to articles of manufacture comprising an adhesive that is permanently adhered to a substrate of the article and can be used to attach the substrate to a second substrate of the article, or to another article. Articles of the invention include protective films comprising a base substrate such as, for example, polyethylene, polypropylene, polyester and paper. The adhesive may also advantageously be used in the manufacture of electronic components such as polarized films used in the manufacture of LCD assemblies. When used in the manufacture of polarized films the adhesive may advantageously also comprise a long chain (C6 or greater) alkyl acrylate monomer. Such adhesive have excellent antistatic properties as well as high humidity and heat resistant properties.

### BRIEF DESCRIPTION OF THE DRAWING FIGURES

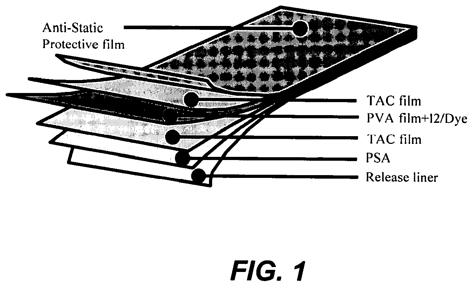

Fig.1 is an exploded diagram of a polarized film.

### DETAILED DESCRIPTION OF THE INVENTION

It has now been discovered that adhesive compositions comprising antistatic agents may advantageously be used to produce articles, such for example protective films and polarized films, having antistatic properties. In a preferred embodiment the adhesives are radiation curable hot melt pressures sensitive adhesives, more preferably UV curable hot melt pressure sensitive adhesives.

The term "hot melt pressure-sensitive adhesive" or "hot melt pressure-sensitive adhesive composition" as used hereinafter means an adhesive or adhesive composition which, upon production of adhesive goods by applying an adhesive or adhesive composition to a base material such as paper, cloth or plastic film, is capable of forming a layer of the pressure-sensitive adhesive or pressure-sensitive adhesive composition on the base material by applying it to the base material as a hot-melt.

The term "pressure-sensitive adhesive" is used herein to refer to a viscoelastic material which adheres instantaneously to most substrates with the application of slight pressure and remains permanently tacky.

The term "tackifier" as used herein means any composition which is useful to impart tack to the hot melt adhesive composition or to increase tack to a predetermined desired level, or modify peel adhesion. ASTM D-1878-1T defines tack as "the property of a material which enables it to form a bond of measurable strength immediately on contact with another surface".

The term "radiation-curable adhesive" as used herein means an adhesive composition which is curable upon exposure to actinic and/or ionizing radiation. The term "radiation" is used herein to include actinic radiation such as ultraviolet radiation and ionizing radiation created by the emission of electrons or highly accelerated nuclear particles such as neutrons, alpha-particles etc.

It has surprising been found that UV curable pressure sensitive adhesives comprising an antistatic agent can advantageously be used in the preparation of articles to provide antistatic benefits. Such articles include, but are not limited to, protective films. The adhesives of the invention may also be used as a laminating adhesive used in the manufacture of e.g., polarized films use in the manufacture of LCD assemblies. It is to be understood that a manufactured polarized film may comprise the antistatic UV cured pressure sensitive adhesive as a lamination adhesive and may also comprise a protective film that also comprises the antistatic UV cured adhesive.

Radiation curable adhesives useful in the practice of the invention will generally comprise, as a base resin, an acrylic polymer. Depending of the composition of the invention intended cure, the composition may-also comprise a photoinitiator and may comprise a tackifier.

Examples of photoinitiators which may be used include one or more of the following: benzophenone, benzyldimethyl ketal, isopropylthioxanthone, bis(2,6-dimethoxybenzoyl)(2,4,4-trimethylpentyl) phosphineoxide, 2-hydroxy-2-methyl-1-phenyl-1-propanone, diphenyl(2,4,6-trimethylbenzoyl)phosphine oxides, 1-hydroxycyclohexyl phenyl ketone, 2-benzyl-2-(dimethylamino)-1-4-(4-morpholinyl)phenyl-1-butanone, alpha,alpha.-dimethoxy-alpha-phenylacetophenone, 2,2-diethoxyacetophenone, 2-methyl-1-4-(methylthio)phenyl-2-(4-morpholinyl)-1-propanone, 2-hydroxy-1-4-(hydroxyethoxy)phenyl-2-methyl-1-propanone.

One preferred radiation curable adhesive comprises, as base resin, an acrylic polymer. Mixtures or blends of acrylic polymers may be used in the practice of the invention. The acrylic polymer is bound to a photoreactive group (referred to herein as a UV curable acrylic polymer). A preferred UV curable acrylic polymer comprises an acrylic polymer backbone molecule that is modified with polymerized photoreactive groups, e.g., a modified benzophenone group that is chemically bonded to the acrylic polymer chain. The polymer is crosslinked by chemical grafting caused by the excitation of the photoinitiator by UV irradiation. The bound photoinitiator will typically be present in amounts of from 0.1 to 5 wt %, based on the wt of the acrylic polymer.

Particularly preferred UV acrylic copolymers comprise a C4 to C8 alkyl acrylate and has bonded to it a pendant benzophenone group. Such UV curable polymers are commercially available from BASF under the trade name acResin® UV. These materials are solvent- and water-free acrylic raw materials. These polymers are highly viscous liquids at room temperature and have to be heated to a temperature of about 120-130°C to become fluid enough (viscosity ca. 40 Pa s) for the coating process on paper or plastic carriers. At this temperature, they can be applied to the backing substrate or carrier with conventional hot melt coating systems. Thus they are processed as hot melts. After being coated on the carrier, the polymer film is crosslinked by UV-irradiation to produce the adhesive properties required.

A particularly preferred UV acrylic copolymer comprises 2-ethylhexyl acrylate that has bonded to it a pendant benzophenone group. Such UV acrylic copolymers are commercially available from BASF under the trade names acResin® A 203 UV and acResin® A 204 UV. BASF's acResin® A 258 UV product, which comprises, as main component, butyl acrylate, may also be used in the practice of the invention, as can DS 3532 (poly ethylhexyl acrylate with bound photinitiator). Other useful UV curable polymers include DS 3552X, also available commercially from BASF.

The adhesives of the invention will typically comprise from 50 wt % up to about 95 wt % of the UV-curable polymer.

The adhesive of the invention will comprise an effective amount of an antistatic agent. Antistatic agents that can be used in the practice of the invention are commercially available and include HOSTASTAT® antistatic agents available from Clariant such as FE 20 LIQ (glycerol fatty acid ester). Non-limiting examples of useful antistatic agents include KT 357 (polyester bound to metal ions), KT 6688 (polyester bound to metal ions) and K-1000 P (surfactant bound to metal ions). FE 2 may also advantagelous be used in the practice of the invention.

Useful antistatic agents are agents that have high conductivity and low resistivity. Useful antistatic agents for use in the practice of the invention are defined as agents that can be included in a radiation curable formulation in an amount effective to increase the conductivity of the adhesive while retaining required pressure sensitive adhesive properties of the cured adhesive may be used as an antistatic agent. Protective films comprising the cured adhesive of the invention will have a resistivity of less than 1 x 10¹² olm/m², even more preferably less than about 1 x 10¹¹ olm/m².

Preferred for use in the manufacture of transparent protective films and end use applications requiring transparent optical grade adhesives are compatible antistatic agents. By compatible means that the antistatic agent blends with the adhesive so that no clouding or discoloration is observed and the adhesive remains clear, and upon removal leaves no antistatic residue. It will be appreciated that antistatic agents that are not fully compatible may be used in the manufacture of protective films that do not require transparency, such as a protective film coating present on a video or DVD player/recorder which is intended to be removed, an must be removed, by the consumer prior to use.

The adhesives of the invention will typically comprise from 0.1 to 15 wt % of an antistatic agent, more typically from 1 to 10 wt %, even more typically from 3 to wt %.

The adhesives of the invention may, if needed to for example modify peel adhesion, also comprise a compatible tackifier. By compatible tackifier is meant, as would be appreciated by the skilled artisan, a tackifier that is able to mix with adhesive polymer, e.g., acrylic polymer. In one preferred embodiment, the tackifier is a rosin based tackifier, and more specifically rosin esters and rosin acids and hydrogenated versions thereof. Examples include Foral 85 (Eastman), Pine Crystal KE 311 (Arakawa) and Staybelite Ester 10 (Hercules), as well as polyvinyl ethers, such as the Lutonal M40 grade from BASF. Other useful tackifiers include aliphatic and aromatic hydrocarbon resins, such as, for example, an alpha methyl styrene resin having a softening point of less than about 110°C. Examples include Kristalex 3085 (Kristalex F85), an alpha-methyl styrene resin having a softening point of about 85°C which is commercially available from Eastman Chemical. Other useful tackifiers include Nikanol H, which is a commercially available xylene resin tackifier.

Levels of tackifiers is generally up to 40 wt %, more typically from 0 up to 30 wt %.

In one particularly preferred embodiment the adhesive also comprises multifunctional unsaturated oligomers. Preferred are multifunctional acrylic monomers containing acrylate or methacrylate functionality, such as pentarythritol tetraacrylate, available commercially from Sartomer (SR 295) and from Eternal Chemical Company (EM 241).

The adhesives of the invention will typically comprise from 0 wt % up to 15 wt % of a multifunctional oligomer.

For exceptional heat and humidity resistance, use of a long chain alkyl acrylate may also advantageously be used. By long chain alkyl acrylate means an alkyl acrylate containing a C6 or greater alkyl group. Preferred are C7 to C30 alkyl acrylates, more typically C7 to C20 alkyl acrylates and mixtures thereof. Nonlimiting examples of long chain alkyl acrylates that can be used in the practice of the invention include lauryl acrylate and isodecylate acrylate. Lauryl acrylate and isodecylate are commercially available, from Sartomer (e.g., SR 335 and SR 395 respectively) and Eternal Chemical Company (e.g., EM 215 and EM219 respectively).

When present, the adhesives will typically comprise from 1 wt % up to 20 wt % of the long chain alkyl acrylate.

The compositions of the invention may include other additives known to those skilled in the art. These additives may include, but are not limited to, polyolefins, additional photoinitiators, pigments, fillers, fluorescent additives, flow and leveling additives, wetting agents, surfactants, antifoaming agents, rheology modifiers, stabilizers, and antioxidants.

In one specific embodiment, the adhesives of the invention may also comprise a polyolefin polymer. Such polymers include semicrystalline or amorphous polyolefins and ethylene-containing polymers or copolymers as well as blends thereof. In one embodiment, the adhesive comprises at least one ethylene copolymer, and may comprise a blend of two or more polymers. The term ethylene copolymer, as used herein, refers to homopolymers, copolymers and ter- or multi-polymers of ethylene. Examples of ethylene copolymers include copolymers with one or more polar monomers which can copolymerize with ethylene, such as vinyl acetate or other vinyl esters of monocarboxylic acids, or acrylic or methacrylic acid or their esters with methanol, ethanol or other alcohols. Included are ethylene vinyl acetate, ethylene methyl acrylate, ethylene n-butyl acrylate, ethylene acrylic acid, ethylene methacrylate and mixtures and blends thereof. Other examples include but are not limited to polyethylene, ethylene/α-olefin interpolymers, poly-(butene-1-co-ethylene), atactic polypropylene, low density polyethylene, homogenous linear ethylene/α-olefin copolymers, ethylene n-butyl acrylate copolymers and ethylene vinyl ester copolymers). Random and block copolymers, as well as blends thereof may be used in the practice of the invention. Particularly useful are polyethylene/polypropylene Licocene copolymers (supplied by Clariant).

When used, polyolefins will typically be present in amounts of up to 50 wt %, more typically from 10 wt % up to 30 wt %.

Antioxidants are typically added to protect the ingredients against degradation during preparation and use of the adhesive compositions and to ensure long-term thermal stability, however without interfering with the irradiation curing of the polymer.

In general up to 3 % by weight of one or more antioxidants is included in the adhesive compositions. Usually, 0 to 3 wt %, more typically from about 0.1% to 3% by, even more preferably from 0.4% by weight to 2.0% by weight.

The UV curable polymer and other desired components such as functional monomer, tackifier, and antioxidant are blended together at a temperature of from 130°C, but not more than 150°C, until a clear mixture is formed. Entrapped air may be removed by application of a vacuum.

Following coating of the composition onto a carrier or release liner such as paper, silicone or foil, it is subjected to UV irradiation. Under the action of UV light, the photoreactive groups in the UV curable polymer crosslink the polymer backbone.

Conventional H bulbs and medium pressure mercury-vapor lamps which emit UV wavelengths can be used in the practice of the invention to cure the adhesives of the invention.

The antistatic pressure sensitive adhesives are advantageously be used in the manufacture of protective films. The films of the invention will comprise a base film or other desired substrate coated with the adhesive of the invention. The coating may be continuous or discontinuous. The adhesive will typically be coated at a weight of from 5 gsm up to 60 gsm. Base substrates that can be used in the practice of the invention include polyethylene, polypropylene, polyester and paper. The protective films may advantageously be used to protect electronic components used in electronic assemblies including flat panel glass from the point of manufacture until their incorporation into the final product, e.g., such as glass substrates used to sandwich liquid crystal material used in the manufacture of LCD displays.

The adhesive may also advantageously be used in the manufacture of electronic components such as polarized films, also used in the manufacture of LCD assemblies. The structure and function of polarized films are well known and understood to skilled practitioners and, as such, will not be explained in detail. Polarizers of the type used in LCD/TFT displays are multicomponent film assemblies having the general structure shown in Fig. 1. Typical layers include poly vinyl acetate (PVA) films, triacetyl cellulose (TAC) films and an antistatic protective film layer. In the practice of the invention, this multicomponent film further comprises a UV cured pressure sensitive adhesive (PSA) and a release liner. In the manufacture of a polarized film, a UV curable pressure sensitive adhesive will typically be applied to a release liner, and then applied to the film assembly. Following removal of the release liner the polarized film may be incorporated into a LCD display.

It is to be understood that a manufactured polarized film may comprise the antistatic UV cured pressure sensitive adhesive as a lamination adhesive and may also comprise a protective film that also comprises the antistatic UV cured adhesive.

In addition to coating the adhesive as a melt, the adhesive may, if desired, be dissolved in an organic solvent such as ethyl acetate and applied in the form of a solution of a UV curable adhesive. Particularly preferred for use in the manufacture of polarized films are UV curable adhesive films that comprise a long chain alkyl (C6 or greater) acrylic monomer, and may also desirable contain a compatible tackifier and a multifunctional acrylic monomer.

The invention will be described further in the following examples, which are included for purposes of illustration and are not intended, in any way, to be limiting of the scope of the invention.

### EXAMPLES

Adhesive formulations having the compositions shown in Table 1 were prepared, coated onto a PET film at a coat wt of 20 ± 2 and were cured using UV-C light source with 50 mj/square meter dose.

Glass peel strength data was measured using a tensile machine with 300 mm/min and 2,400 mm/min tensile speed and 180° peel direction.

Viscosity data was measured by Brookfield viscometer using spindle 27 at 130°C.
Ac Resin® A 204, 2-ethylhexyl acrylate containing polymer having a bound benzphenone group, BASF.
Ac DS3532, poly ethylhexyl acrylate with bound benzphenone group, BASF.
SR 295, multifunctional acrylate oligomer, Sartomer.
FE20, antistatic agent, Clariant.
Irgacure 819, photoinitiator, Ciba Specialty Chemicals.
Irganox 3052FF, antioxidant, Ciba Speciality Chemicals.
Licocene 1302, polyethylene polymer, Clariant.
Licocene 1602, polyethylene polymer, Clariant.

**Table 1**

| | 1 | 2 | 3 | 4 | 5 | 6 | 7 | 8 |
|---|---|---|---|---|---|---|---|---|
| wt % | | | | | | | | |
| Ac204 | 93.75 | 92.75 | 89.75 | 87.75 | 85.75 | | | |
| Ac DS3532 | | | | | | 85.75 | 82.75 | 77.75 |
| SR295 | 5 | 5 | 5 | 5 | 5 | 7 | 5 | 5 |
| Irgacure 819 | 1 | 1 | 1 | 1 | 1 | | | |
| FE20 | | 1 | 3 | 5 | 7 | 7 | 7 | 7 |
| Irganox 3052ff | 0.25 | 0.25 | 0.25 | 0.25 | 0.25 | 0.25 | 0.25 | 0.25 |
| Licocene 1302 | | | | | | | 5 | |
| Licocene 1602 | | | | | | | | 10 |
| | | | | | | | | |
| Viscosity MPS @ 130°C | 35,000 | 32,000 | 25,200 | 21,150 | 18,000 | | | |
| Peel strength (gf/in) low tensile speed 300 mm/min | 120 | 70 | 22 | 9.6 | 6.5 | 7.2 | 9.5 | 6.5 |
| Peel strength (gf/in) high tensile speed 2,400 mm/min | 720 | 420 | 172.4 | 54 | 25 | 37.7 | 44.3 | 23 |
| Resistivity Ω/cm¹ | > 10¹² | > 10¹² | > 10¹² | 6.88x10¹⁰ | 5.22x10⁹ | 6.91x10¹¹ | 6.55x10¹¹ | 1.77x10¹⁰ |

## Claims

1. A radiation curable hot melt adhesive composition comprising an acrylic polymer, 0,1 to 15 wt% of an antistatic agent and a photoinitiator, wherein the photoinitiator is bound to said acrylic polymer.

2. The composition of claim 1 wherein the antistatic agent comprises a glycerol fatty acid ester or a polyester having a bound metal ion.

3. The composition of any of claims 1-2 which has been cured by UV irradiation.

4. An article of manufacture comprising the cured hot melt adhesive composition of claim 3.

5. The article of claim 4 which is a protective film.

6. The protective film of claim 5 comprising a polyethylene, polypropylene or polyester film.

7. The protective film of claim 6 having a resistivity of less than 1 x 10¹² Ω/cm².

8. A polarized film comprising the UV cured adhesive of claim 3.

## Patentansprüche

1. Strahlungshärtbare Schmelzklebstoffzusammensetzung, umfassend ein Acrylpolymer, 0,1 bis 15 Gew.-% eines Antistatikums und einen Photoinitiator, wobei der Photoinitiator an das Acrylpolymer gebunden ist.

2. Zusammensetzung nach Anspruch 1, wobei das Antistatikum einen Glycerinfettsäureester oder einen Polyester mit einem gebundenen Metallion umfasst.

3. Zusammensetzung nach einem der Ansprüche 1-2, die durch UV-Bestrahlung ausgehärtet worden ist.

4. Herstellungserzeugnis, umfassend die ausgehärtete Schmelzklebstoffzusammensetzung nach Anspruch 3.

5. Erzeugnis nach Anspruch 4, wobei es sich um eine Schutzfolie handelt.

6. Schutzfolie nach Anspruch 5, umfassend eine Polyethylen-, eine Polypropylen- oder eine Polyesterfolie.

7. Schutzfolie nach Anspruch 6 mit einer Widerstandsfähigkeit von weniger als 1 x 10¹² Ω/cm².

8. Polarisierte Folie, umfassend den UV-gehärteten Klebstoff nach Anspruch 3.

## Revendications

1. Composition adhésive thermofusible durcissable par rayonnement, comprenant un polymère acrylique, de 0,1 à 15% en poids d'un agent antistatique et un photo-initiateur, le photo-initiateur étant lié audit polymère acrylique.

2. Composition selon la revendication 1, dans laquelle l'agent antistatique comprend un ester d'acide gras de glycérol ou un polyester comportant un ion métallique lié.

3. Composition selon l'une quelconque des revendications 1 et 2, laquelle a été durcie par irradiation UV.

4. Article de fabrication comprenant la composition adhésive thermofusible durcie selon la revendication 3.

5. Article selon la revendication 4, lequel est un film protecteur.

6. Film protecteur selon la revendication 5, comprenant un film de polyéthylène, de polypropylène ou de polyester.

7. Film protecteur selon la revendication 6, ayant une résistivité inférieure à 1 x 10¹² Ω/cm².

8. Film polarisé comprenant l'adhésif durci par UV selon la revendication 3.
